Europäisches Patentamt

European Patent Office

Office européen des brevets

(19)

(11) **EP 1 180 671 A1**

(12) **EUROPEAN PATENT APPLICATION**

(43) Date of publication:
**20.02.2002 Bulletin 2002/08**

(51) Int Cl.⁷: **G01K 13/08**, H02K 11/00

(21) Application number: **01104301.5**

(22) Date of filing: **22.02.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **07.08.2000 JP 2000244033**

(71) Applicant: **Hitachi, Ltd.**
**Chiyoda-ku, Tokyo 101-8010 (JP)**

(72) Inventors:
• **Tanahashi, Hideo, c/o Hitachi, Ltd.**
**Chiyoda-ku, Tokyo 100-8220 (JP)**

• **Yasaka, Yasuhiro, c/o Hitachi, Ltd.**
**Chiyoda-ku, Tokyo 100-8220 (JP)**
• **Shiobara, Ryoichi, c/o Hitachi, Ltd.**
**Chiyoda-ku, Tokyo 100-8220 (JP)**
• **Tsuji, Eiji, c/o Hitachi, Ltd.**
**Chiyoda-ku, Tokyo 100-8220 (JP)**
• **Ishihara, Atsushi, c/o Hitachi, Ltd.**
**Chiyoda-ku, Tokyo 100-8220 (JP)**
• **Kayukawa, Shigehiro, c/o Hitachi, Ltd.**
**Chiyoda-ku, Tokyo 100-8220 (JP)**

(74) Representative: **Strehl Schübel-Hopf & Partner**
**Maximilianstrasse 54**
**80538 München (DE)**

(54) **Brushless alternating-current generating apparatus and method for measuring field winding temperature therefor**

(57)     A brushless alternating-current generating apparatus having a brushless alternating-current generator (1), an alternating-current exciter (4) coupled to the brushless alternating-current generator, and a field winding temperature measuring device for measuring a field winding temperature (T) of the alternating-current generator. The field winding temperature measuring device has a voltage measuring device (2, 2') for measuring a field voltage of the brushless alternating-current generator, a current measuring device (8) for measuring a current supplied to the alternating-current exciter, and a field winding temperature calculating unit (7) for calculating the field winding temperature (T) of the brushless alternating-current generator from measured signal values from these measuring devices.

FIG. 1

ROTATABLE PORTION

EP 1 180 671 A1

**Description**

BACKGROUND OF THE INVENTION

The present invention relates to a brushless alternating-current generating apparatus and a method for measuring the temperature of a field winding therefor, and more particularly, to a brushless alternating-current generating apparatus which has a field winding temperature measuring means that is formed to measure a field voltage and an excition current value of a brushless alternating-current generator to calculate a field winding temperature from the measured values.

Conventionally, a brushless alternating-current generating apparatus of the type mentioned above has a brushless alternating current generator connected or coupled to an alternating-current exciter for exciting the brushless alternating-current generator, such that an alternating-current output generated by the alternating-current exciter is supplied to a field winding of the brushless alternating-current generator through a rectifier disposed in a rotor, i.e., after the alternating-current output is converted to a direct current.

In this structure, it is a common practice to observe a field winding temperature of the brushless alternating-current generator from the view point of protection of the field winding. As a means for measuring the field winding temperature, a temperature sensor is disposed at the field winding, or recently, the field winding temperature is calculated from field voltage and excitation current values of the brushless alternating-current generator.

In this type of winding temperature measuring device, i.e., a device which measures a voltage and a current to calculate a winding temperature as a function of these measured voltage and current values, since a brushless alternating-current generating apparatus has a field winding disposed on a rotor side, a variety of methods and techniques have been devised for leading or outputting the measured signals to a stator side. Generally known means for leading such measured voltage and current signals to the stator side include, by way of example, one which has a pickup coil disposed between a rotor and a stator for introducing measured signals on the rotor side to the stator side to calculate a temperature from these signals; a simple one which has slip rings disposed on the rotor side and brushes on the stator side to introduce measured signals on the rotor side to the stator side through the slip rings and the brushes; one which uses a rotary transformer or an auxiliary generator to measure a field current and a field voltage to calculate a field winding temperature from the measured current and voltage signals; and so on.

Literatures related to this type of temperature measurement include, for example, JP-A-5-344685, JP-A-53-28212, and so on.

SUMMARY OF THE INVENTION

With the filed winding temperature measuring devices for a brushless alternating-current generator formed as described above, for example, the device which measures field current and voltage of a brushless alternating-current generator through the slip rings has a large number of slip rings and brushes disposed in the rotor, and accordingly suffers from complexity in structure of the associated periphery, thus losing the usefulness of specially employing the brushless scheme. Also, in the device which uses a pickup coil or a rotary transformer or an auxiliary generator to measure a field voltage and a field current, the provision of these components can result in a complicated structure and an increased size of the rotor as well.

The present invention has been made in view of the problem described above, and its object is to provide a brushless alternating-current generating apparatus and a method for measuring a field winding temperature therefor of the type mentioned above which are capable of measuring a field winding temperature without the need for complicated structures of a rotor and its related peripheral part, i.e., in a simple structure.

In order to achieve the object mentioned above, the present invention provides a brushless alternating-current generating apparatus which is comprised of a brushless alternating-current generator, an alternating-current exciter directly coupled to the brushless alternating-current generator, a rectifier mounted to a rotor of the brushless alternating-current generator for rectifying an alternating-current output generated in the alternating-current exciter to supply the rectified output to a field winding of the brushless alternating-current generator, and a field winding temperature measuring device for measuring a field winding temperature of the alternating-current generator, wherein the field winding temperature measuring device is formed to measure a field voltage and an excition current value of the brushless alternating-current generator to calculate the field winding temperature. The field winding temperature measuring device includes a voltage measuring device for measuring a field voltage of the brushless alternating-current generator, a current measuring device for measuring a current supplied to the alternating-current exciter, and a field winding temperature calculating unit for calculating the field winding temperature of the brushless alternating-current generator from signal values measured by the current measuring device and the voltage measuring device.

The present invention also provides a brushless alternating-current generating apparatus made up of a brushless alternating-current generator, an alternating-current exciter connected or coupled to the brushless alternating-current generator, a rectifier mounted to the alternating-current exciter or to a rotor of the brushless alternating-current generator for rectifying an alternating-current output generated in the alternating-current exciter to supply the rectified output to a field winding of the brushless alternating-current generator, and a field winding temperature measuring device for measuring a field winding temperature of the alternating-current generator, wherein the field winding temperature measuring device is formed to measure a field voltage and an excition current value of the brushless alternating-current generator to calculate the field winding temperature. The field winding temperature measuring device includes a voltage measuring device for measuring a field voltage supplied to the field winding of the brushless alternating-current generator, a current measuring device for measuring a current flowing through an excitation winding of the alternating-current exciter, and a field winding temperature calculating unit for calculating a resistance of the winding from signal values measured by the current measuring device and the voltage measuring device, and for calculating the field winding temperature of the brushless alternating-current generator based on a temperature characteristic of the resistance.

The present invention further provides a method for measuring a field winding temperature of a brushless alternating-current generating apparatus which has a brushless alternating-current generator and an alternating-current exciter connected or coupled to each other, and rectifies an alternating-current output generated by the alternating-current exciter to supply the rectified output to a field winding of the brushless alternating-current generator, wherein the field winding temperature of the brushless alternating-current generator is calculated from a field voltage and an excition current value of the brushless alternating-current generator. The method comprises the step of calculating the field winding temperature from a current value of a current flowing into the alternating-current exciter and a field voltage value of the brushless alternating-current generator.

The present invention further provides a method for measuring a field winding temperature of a brushless alternating-current generating apparatus which has a brushless alternating-current generator and an alternating-current exciter connected or coupled to each other, and rectifies an alternating-current output generated by the alternating-current exciter to supply the rectified output to a field winding of the brushless alternating-current generator, wherein the field winding temperature of the brushless alternating-current generator is calculated from a field voltage and an excition current value of the brushless alternating-current generator. The method comprises the steps of calculating a resistance of the field winding of the brushless alternating-current generator from a current value of a current flowing into the alternating-current exciter, and a field voltage value of the brushless alternating-current generator, and calculating the field winding temperature of the brushless alternating-current generator based on a temperature characteristic of the resistance.

As appreciated, with the brushless alternating-current generating apparatus configured as described above, the device for measuring a field winding temperature of the brushless alternating-current generator is made up of a voltage measuring device for measuring a field voltage of the brushless alternating-current generator, a current measuring device for measuring a current supplied to the alternating-current exciter, and a field winding temperature calculating unit for calculating the field winding temperature of the brushless alternating-current generator from signal values measured by the current measuring device and the voltage measuring device. Thus, since the field winding temperature calculating unit is formed to measure a current supplied to the alternating-current exciter, the measurement of the current for calculating the field winding temperature, i.e., the measurement of the current supplied to the alternating-current exciter, can be made on the stator side, the field voltage only need be led from the rotor side, without particularly requiring a number of slip rings and pickup coils, or a rotary transformer, and so on. It is therefore possible to measure the field winding temperature without the need for a complicated structure of the rotor and its periphery.

BRIEF DESCRIPTION OF THE DRAWINGS

Fig. 1 is a system diagram illustrating an embodiment of a brushless alternating-current generating apparatus according to the present invention;
Fig. 2 is a block diagram illustrating a temperature calculating method employed by a field winding temperature calculating unit 7 in Fig. 1;
Fig. 3 is a system diagram illustrating another embodiment of a brushless alternating-current generating apparatus according to the present invention; and
Fig. 4 is a block diagram illustrating a temperature calculating method employed by a field winding temperature calculating unit 7 in Fig. 3.

DESCRIPTION OF THE EMBODIMENTS

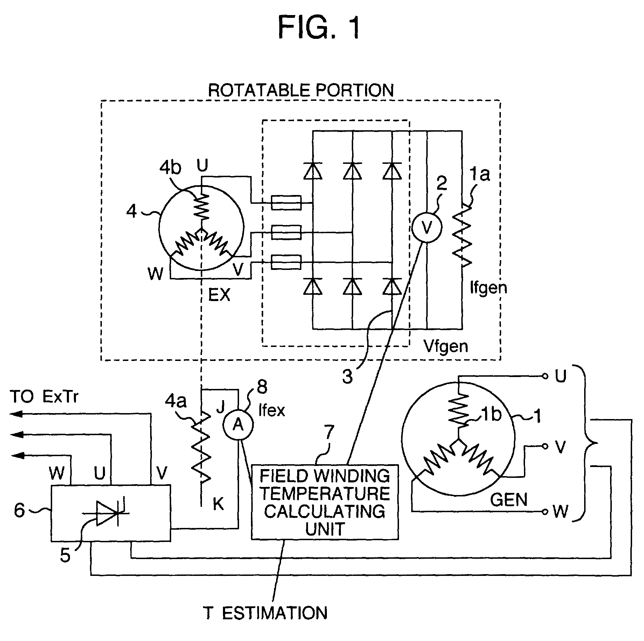

The present invention will hereinafter be described in detail with reference to illustrated embodiments. Fig. 1 illustrates a brushless alternating-current generating apparatus in a system diagram (circuit configuration diagram). The illustrated brushless alternating-current generating apparatus has a brushless alternating-current generator 1; a field winding 1a of the generator 1; an alternating-current exciter 4; a field winding 4a of the exciter 4; a rotary rectifier 3 disposed in a rotatable portion (rotor); and an automatic voltage regulator (AVR) 6.

As illustrated in Fig. 1, the structure of the brushless alternating-current generating apparatus is such that an armature 4b and the rotary rectifier 3 on a rotor side of the alternating-current exciter 4 are mounted on a rotor shaft of the brushless alternating-current generator 1, so that excited power can be supplied from the alternating-current exciter 4 to the field winding 1a of the brushless alternating-current generator 1 without intervention of brushes, slip rings or the like. In this structure, a voltage Vfgen of the brushless alternating-current generator 1 is outputted in accordance with the following principle of operation.

An exciting current supplied to the alternating-current exciter 4 is controlled by the automatic voltage regulator 6 through a rectifying element or commutator 5. The automatic voltage regulator 6 is powered by an excitation transformer ExTr (not shown). The alternating-current exciting field winding 4a on the stator side of the alternating-current exciter 4 is connected to the automatic voltage regulator 6, so that as an exciting current Ifex flows into the alternating-current exciting field winding 4a, magnetic flux is generated in the field core to generate an induced voltage in an armature winding 4b of the alternating-current exciter 4. As a result, a three-phase alternating current generated in the armature winding 4b of the alternating-current exciter 4 is rectified by the rotary rectifier 3 mounted on the rotor and converted to a direct current which flows into the field winding 1a of the brushless alternating-current generator 1 as a brushless alternating-current generator field current Ifgen.

As the current flows through the field winding 1a of the brushless alternating-current generator 1, magnetic flux is generated in the field core of the brushless alternating-current generator 1, resulting in an induced voltage generated in an armature winding 1b of the brushless alternating-current generator 1. This induced voltage serves as the output voltage Vfgen of the brushless alternating-current generator 1.

A measurement of a field winding temperature in the present invention involves measuring the output voltage Vfgen of the brushless alternating-current generator 1 and the alternating-current excition current Ifex using measuring devices, and calculating the field winding temperature from the measured voltage Vfgen and current Ifex in a field winding temperature calculating unit 7. Specifically, a means for measuring the field winding temperature is comprised of a voltage measuring device 2 for measuring a field voltage of the brushless alternating-current generator 1; a current measuring device 8 for measuring a current supplied to the alternating-current exciter 4; and the field winding temperature calculating unit 7 for calculating the field winding temperature of the brushless alternating-current generator 1 from the measured signal values provided by the current measuring device 8 and the voltage measuring device 2.

Next, description will be made on how to measure the field winding temperature of the brushless alternating-current generator 1. The field current measuring device 8 for measuring a field current supplied to the alternating-current exciter 4 is connected in series with the field winding 4a of the alternating-current exciter 4 to measure the excition current Ifex flowing through the field winding 4a. The voltage measuring device 2 for measuring a field voltage of the brushless alternating-current generator 1 is connected in parallel with the field winding 1a of the brushless alternating-current generator 1 to measure the field voltage across both ends of the field winding 1a.

The field winding temperature calculating unit 7 is connected to the field current measuring device 8 for measuring the field current supplied to the alternating-current exciter 4 and the voltage measuring device 2 for measuring the field voltage of the brushless alternating-current generator 1 through signal lines for communicating the results of the measurements, and calculates the field winding temperature of the brushless alternating-current generator 1 from these signals.

In this way, the field winding temperature T of the brushless alternating-current generator 1 can be readily calculated by measuring the field voltage Vfgen of the brushless alternating-current generator 1 and using the measured field voltage Vfgen together with the field current Ifgen of the brushless alternating-current generator 1, the structure therefor being simplified. More specifically, since the measurement of the current for calculating the field winding temperature of the brushless alternating-current generator 1 can be made on the stator side, the field voltage only need be outputted or led from the rotor side, without particularly requiring a number of slip rings and pickup coils, or a rotary transformer, and so on. It is therefore possible to measure the field winding temperature without the need for a complicated structure of the rotor and its peripery.

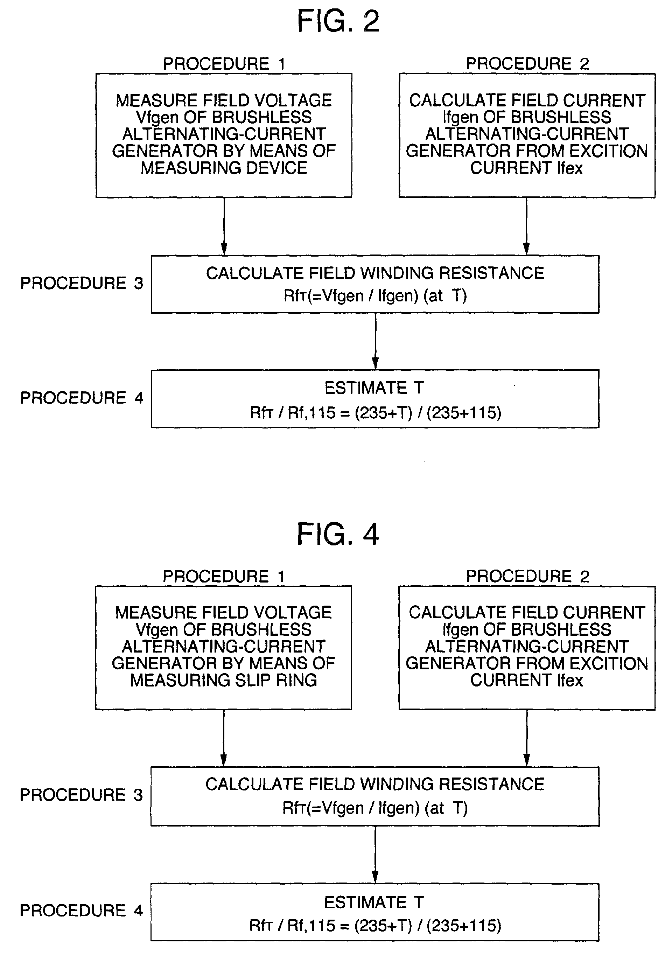

Fig. 2 describes a method of measuring the field winding temperature of the brushless alternating-current generator, i.e., Fig. 2 is a block diagram illustrating a temperature calculating method employed in the field winding temperature calculating unit 7, which is performed in order of from procedure 1 to procedure 4. More specifically, the field voltage Vfgen of the brushless alternating-current generator is measured in procedure 1, and the excition current Ifex is measured in procedure 2. It should be noted that the field winding temperature is derived from a relationship between the field current Ifgen and the field voltage Vfgen, so that the calculation of the field winding temperature requires a calculation of the field current Ifgen of the brushless alternating-current generator 1 from the field current Ifex.

The field current Ifgen is calculated by the following equation (1) using an armature voltage and current and a power factor cos ϕ of the brushless alternating-current generator, as well as a field current If1 at no-load rated voltage and a field current If2 at three-phase short-circuit rated current which are factory-measured values:

$$Ifgen = (If_1{}^2 + (k \times If_2)^2 + 2 \times k \times If_1 \times If_2 \times \sin(\cos^{-1}\phi))^{1/2} \qquad (1)$$

where k is a coefficient representing the suturation state corresponding to the power factor.

A procedure 3 is a method of calculating a field winding resistance RfT (=Vfgen/Ifgen) of the brushless alternating-current generator 1.

The procedure 4 is a method of finding the relationship between the field winding resistance Rft and the temperature T.

The field winding resistance RfT is expressed by the following equation (2):

$$Rf_T = Rf_{115} \times (235+T)/(235+115) \qquad (2)$$

where $Rf_{115}$ is the field winding resistance (Ω) at 115 °C.

Substituting the equation (2) into the equation in procedure 3, the generator field winding temperature T (°C) is expressed by the following equation (3):

$$T = 115 + (235+115)/Rf_{115} \times (Vfgen/Ifgen - Rf_{115}) \qquad (3)$$

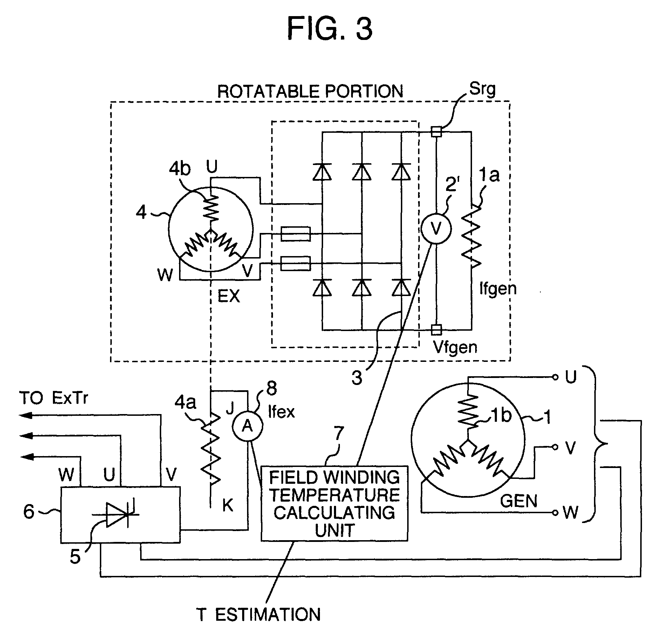

Figs. 3 and 4 illustrate a system for measuring a field winding temperature of a brushless alternating-current generator according to another embodiment which differs from the foregoing embodiment in that a measuring device 2' including a slip ring Srg is used instead of the measuring device 2 as a device for measuring the field voltage Vfgen of the brushless alternating-current generator. The voltage measuring device 2' has a measuring unit (V) disposed on the stator side of the brushless alternating-current generator to measure a field voltage of the brushless alternating-current generator through the slip ring Srg disposed in a rotatable portion of the brushless alternating-current generator. Fig. 4 is a block diagram illustrating a temperature calculating method employed in the field winding temperature calculating unit 7 in this embodiment. Since the contents of the block diagram are identical to the foregoing embodiment, explanation thereof is omitted. Likewise, with such a measuring method, the temperature can be measured in a simplified structure.

As described above, the brushless alternating-current generating apparatus of the foregoing embodiments measures a field voltage of the brushless alternating-current generator by means of a measuring device using a measuring unit or a slip ring, estimates a field current of the brushless alternating-current generator from an exciter current, and calculates the field winding resistance of the brushless alternating-current generator to measure the field winding temperature of the brushless alternating-current generator, thereby making it possible to correctly estimate the field winding temperature of the brushless alternating-current generator in a simple structure.

As will be appreciated from the foregoing description, according to the foregoing embodiments, it is possible to provide a brushless alternating-current generating apparatus and a method for measuring a field winding temperature therefor which can measure the field winding temperature without the need for a complicated structure of a rotor and its periphery, i.e., in a simple structure.

**Claims**

**1.** A brushless alternating-current generating apparatus comprising:

a brushless alternating-current generator (1);
an alternating-current exciter (4) connected to said brushless alternating-current generator;
a rectifier (3) mounted to a rotor of said brushless alternating-current generator for rectifying an alternating-current output generated in said alternating-current exciter to supply the rectified output to a field winding (1a) of said brushless alternating-current generator; and
a field winding temperature measuring device for measuring a field winding temperature of said alternating-current generator, wherein:

said field winding temperature measuring device includes:

a voltage measuring device (2, 2') for measuring a field voltage of said brushless alternating-current generator;

a current measuring device (8) for measuring a current supplied to said alternating-current exciter; and

a field winding temperature calculating unit (7) for calculating the field winding temperature of said brushless alternating-current generator from signal values measured by said current measuring device and said voltage measuring device.

2. A brushless alternating-current generating apparatus comprising:

a brushless alternating-current generator (1) ;

an alternating-current exciter (4) coupled to said brushless alternating-current generator;

a rectifier (3) mounted to said alternating-current exciter or to a rotor of said brushless alternating-current generator for rectifying an alternating-current output generated in said alternating-current exciter to supply the rectified output to a field winding (1a) of said brushless alternating-current generator; and

a field winding temperature measuring device for measuring a field winding temperature (T) of said alternating-current generator, wherein:

said field winding temperature measuring device includes:

a voltage measuring device (2, 2') for measuring a field voltage supplied to the field winding of said brushless alternating-current generator;

a current measuring device (8) for measuring a current flowing through an excitation winding of said alternating-current exciter; and

a field winding temperature calculating unit (7) for calculating a resistance (RfT) of the field winding from signal values measured by said current measuring device and said voltage measuring device, and for calculating the field winding temperature (T) of said brushless alternating-current generator based on a temperature characteristic of said resistance.

3. A brushless alternating-current generating apparatus according to claim 1, wherein said voltage measuring device (2') includes a measuring unit (V) disposed on a stator side of said brushless alternating-current generator for measuring the field voltage of said brushless alternating-current generator through a slip ring (Srg) disposed in a rotatable portion of said brushless alternating-current generator.

4. A brushless alternating-current generating apparatus according to claim 2, wherein said voltage measuring device (2') includes a measuring unit (V) disposed on a stator side of said brushless alternating-current generator for measuring the field voltage of said brushless alternating-current generator through a slip ring (Srg) disposed in a rotatable portion of said brushless alternating-current generator.

5. A method for measuring a field winding temperature (T) of a brushless alternating-current generating apparatus which has a brushless alternating-current generator (1) and an alternating-current exciter (4) coupled to each other, and rectifies an alternating-current output generated by said alternating-current exciter to supply the rectified output to a field winding of said brushless alternating-current generator, said method comprising the step of:

calculating said field winding temperature (T) from a current value (Ifex) of a current flowing into said alternating-current exciter and a field voltage value (Vfgen) of said brushless alternating-current generator (Figs. 2 and 4).

6. A method for measuring a field winding temperature (T) of a brushless alternating-current generating apparatus which has a brushless alternating-current generator (1) and an alternating-current exciter (4) coupled to each other, and rectifies an alternating-current output generated by said alternating-current exciter to supply the rectified output to a field winding of said brushless alternating-current generator, said method comprising the steps of:

calculating a resistance (RfT) of the field winding of said brushless alternating-current generator from a current value (Ifex) of a current flowing into said alternating-current exciter, and a field voltage value (Vfgen) of said brushless alternating-current generator (procedure 3); and

calculating the field winding temperature (T) of said brushless alternating-current generator from a temperature characteristic of said resistance (procedure 4) to find said field winding temperature.

# FIG. 1

ROTATABLE PORTION

TO ExTr

FIELD WINDING
TEMPERATURE
CALCULATING
UNIT

GEN

T ESTIMATION

# FIG. 2

|  | PROCEDURE 1 | PROCEDURE 2 |
|---|---|---|
|  | MEASURE FIELD VOLTAGE Vfgen OF BRUSHLESS ALTERNATING-CURRENT GENERATOR BY MEANS OF MEASURING DEVICE | CALCULATE FIELD CURRENT Ifgen OF BRUSHLESS ALTERNATING-CURRENT GENERATOR FROM EXCITION CURRENT Ifex |

PROCEDURE 3

CALCULATE FIELD WINDING RESISTANCE
$Rf_T (=Vfgen / Ifgen)$ (at T)

PROCEDURE 4

ESTIMATE T
$Rf_T / Rf,115 = (235+T) / (235+115)$

# FIG. 4

|  | PROCEDURE 1 | PROCEDURE 2 |
|---|---|---|
|  | MEASURE FIELD VOLTAGE Vfgen OF BRUSHLESS ALTERNATING-CURRENT GENERATOR BY MEANS OF MEASURING SLIP RING | CALCULATE FIELD CURRENT Ifgen OF BRUSHLESS ALTERNATING-CURRENT GENERATOR FROM EXCITION CURRENT Ifex |

PROCEDURE 3

CALCULATE FIELD WINDING RESISTANCE
$Rf_T (=Vfgen / Ifgen)$ (at T)

PROCEDURE 4

ESTIMATE T
$Rf_T / Rf,115 = (235+T) / (235+115)$

EP 1 180 671 A1



# FIG. 3

## EUROPEAN SEARCH REPORT

European Patent Office

Application Number

EP 01 10 4301

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | PATENT ABSTRACTS OF JAPAN vol. 018, no. 180 (E-1531), 28 March 1994 (1994-03-28) -& JP 05 344685 A (FUJI ELECTRIC CO LTD), 24 December 1993 (1993-12-24) * abstract * | 1,5 | G01K13/08 H02K11/00 |
| D,A | PATENT ABSTRACTS OF JAPAN vol. 002, no. 062 (E-032), 11 May 1978 (1978-05-11) -& JP 53 028212 A (MITSUBISHI ELECTRIC CORP), 16 March 1978 (1978-03-16) * abstract * | 1,5 | |

TECHNICAL FIELDS SEARCHED (Int.Cl.7)

G01K
H02K

The present search report has been drawn up for all claims

| Place of search | Date of completion of the search | Examiner |
|---|---|---|
| THE HAGUE | 18 October 2001 | Ramboer, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 01 10 4301

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2001

| Patent document cited in search report | | Publication date | Patent family member(s) | | Publication date |
|---|---|---|---|---|---|
| JP 05344685 | A | 24-12-1993 | JP | 2929843 B2 | 03-08-1999 |
| JP 53028212 | A | 16-03-1978 | JP | 1164635 C | 26-08-1983 |
| | | | JP | 57056294 B | 29-11-1982 |